# EUROPÄISCHE PATENTSCHRIFT

(11) **EP 3 341 225 B1**
(45) Veröffentlichungstag und Bekanntmachung des Hinweises auf die Patenterteilung: **26.12.2018**
(21) Anmeldenummer: 16787437.9
(22) Anmeldetag: 26.10.2016
(51) Int. Cl.: B60C 23/00

(54) **DREHDURCHFÜHRUNG EINER REIFENDRUCKREGELANLAGE SOWIE ANORDNUNG UMFASSEND EINE SOLCHE DREHDURCHFÜHRUNG SOWIE EINE AUF EINEM ACHSSTUMMEL GELAGERTE NABE**
ROTARY UNION OF A TYRE PRESSURE CONTROL SYSTEM, AND ASSEMBLY COMPRISING A ROTARY UNION OF THIS TYPE, AS WELL AS A HUB MOUNTED ON AN AXLE END
PASSAGE TOURNANT D'UN SYSTÈME DE RÉGULATION DE PRESSION DE PNEUMATIQUE AINSI QU'ENSEMBLE COMPORTANT UN TEL PASSAGE TOURNANT ET MOYEU MONTÉ SUR UN TOURILLON D'ESSIEU

(30) Priorität: 27.10.2015 DE 202015105702 U
(43) Veröffentlichungstag der Anmeldung: 04.07.2018
(73) Patentinhaber: PTG Reifendruckregelsysteme GmbH, 41468 Neuss (DE)
(72) Erfinder: TIGGES, Martin, 41468 Neuss (DE); LINZBACH, Martin, 41468 Neuss (DE)
(74) Vertreter: Haverkamp, Jens
(86) Internationale Anmeldenummer: PCT/EP2016/075726
(87) Internationale Veröffentlichungsnummer: WO 2017/072140

(56) Entgegenhaltungen:
- EP-B1- 1 077 816
- DE-A1-102010 054 366
- JP-U- S5 797 707

## Beschreibung

Die Erfindung betrifft eine Drehdurchführung einer Reifendruckregelanlage zur Übertragung von Luft aus dem Bereich einer Achse eines Fahrzeuges an ein auf einer Nabe sitzendes Rad, welche Drehdurchführung
- einen mit einem Fluidkanal in axialer Richtung an eine fahrzeugseitige, durch einen Achsstummel geführte Luftversorgungsleitung anschließbaren Stator sowie einen konzentrisch zu dem Stator angeordneten Rotor mit wenigstens einem Anschluss zum Herstellen einer Fluidverbindung mit einem Radventil aufweist,
- über Mittel zu ihrer fahrzeugseitigen Befestigung verfügt, welche Befestigungsmittel ausgelegt sind, den Rotor der Drehdurchführung unter Zwischenschaltung einer Dichtung an die drehbar gegenüber dem Achsstummel gelagerte Nabe anzuschließen, und
- ein erstes Teil einer in axialer Richtung in Eingriff zu stellenden Steckkupplung umfasst, dessen komplementäres Steckkupplungsteil einem das bezüglich seines Reifendruckes zu regelnde Rad tragenden Achsstummel zugeordnet ist.
Ferner betrifft die Erfindung eine Anordnung, umfassend eine solche Drehdurchführung sowie eine auf einem Achsstummel eines Fahrzeuges gelagerte Nabe zum Tragen eines mit Luft befüllbaren auf einer Felge sitzenden Reifens.

Reifendruckregelanlagen werden bei Kraftfahrzeugen, etwa bei Nutzfahrzeugen, wie Lastkraftwagen, Schleppern, Traktoren oder Erdbewegungsmaschinen und auch bei nicht angetriebenen Fahrzeugen, wie beispielsweise Anhängern eingesetzt, um den in den Reifen befindlichen Reifendruck an unterschiedliche Betriebssituationen anpassen zu können. Eine Reifendruckanpassung erfolgt vornehmlich in Abhängigkeit von dem zu befahrenden Untergrund. Durch den Reifendruck kann die Aufstandsfläche des Reifens verändert werden. Ein Reifen weist bei einem geringeren Reifendruck eine größere Aufstandsfläche auf als mit höherem Reifendruck. Aus diesem Grunde wird man bei weichem Untergrund lieber mit einem geringeren Reifendruck und mit höherer Aufstandsfläche fahren als auf einer befestigten Fahrbahn. Ebenfalls empfiehlt es sich, den Reifeninnendruck und somit die Reifenbefüllung an den jeweiligen Beladungszustand des Fahrzeuges anzupassen. Eine Reifeninnendruckanpassung kann bei fahrendem Fahrzeug erfolgen. Durch eine optimierte Anpassung des Reifeninnendruckes können in Abhängigkeit von dem Untergrund der Rollwiderstand und der Reifenverschleiß nicht unerheblich reduziert werden. Zudem führt ein optimal eingestellter Reifeninnendruck zu einem spürbar reduzierten Kraftstoffverbrauch.

Derartige Reifendruckregelanlagen verfügen über eine Drehdurchführung als Luftübertragungswegsamkeit zwischen den fahrzeugseitigen Einrichtungen der Reifendruckregelanlage und den dazugehörigen radseitigen Aggregaten. Somit wird beispielsweise zum Erhöhen des Reifeninnendruckes Druckluft von einer fahrzeugseitigen Druckluftquelle durch die Drehdurchführung hindurch an das drehbar gelagerte Rad übertragen. Gleiches gilt im umgekehrten Falle eines gewünschten Absenkens des Reifeninnendruckes, wenn keine radseitige Reifenentlüftung vorgesehen ist.

Sollen angetriebene Räder an eine solche Reifendruckregelung angeschlossen werden, ist die Drehdurchführung typischerweise in radialer Anordnung ausgelegt und zwischen dem Achsstummel und der darauf drehbar gelagerten Nabe angeordnet. Stator und Rotor sind koaxial zur Drehachse des Rades angeordnet. Zur Druckluftübertragung verfügen Stator und Rotor über ringförmige einander bezüglich des Bewegungsspaltes gegenüberliegende und zueinander weisend offene Nuten oder Kammern, die durch aktivierbare Dichtungen (Druckdichtungen), wie in EP 1 095 799 B1 beschrieben, für den Zeitpunkt der Druckluftübertragung zur Ausbildung einer Druckluftübertragungskammer abgedichtet werden. Radseitig ist an den Rotor der Drehdurchführung eine zur Felge führende Luftleitung vorgesehen. Diese durchgreift die Felge in einer Öffnung und mündet in das Reifeninnere. In die radseitige Luftleitung ist ein ansteuerbares Ventil - ein Radventil - eingeschaltet, welches für den Vorgang der Reifendruckregelung geöffnet und nach Abschluss des Vorganges geschlossen wird. Die Druckluft selbst wird bei einem Kraftfahrzeug typischerweise mit einem fahrzeugseitig angeordneten Kompressor als Druckluftquelle bereitgestellt. Als Kompressor dient zumeist der bei derartigen Fahrzeugen ohnehin zum Betreiben der Bremsanlage vorhandene Kompressor. Bei Anhängern verfügt dieser über einen zum Betreiben der Reifendruckregelanlage dienenden Kompressor oder die Luftzufuhr des Anhängers ist an die Druckluftversorgung der Zugmaschine angeschlossen.

Bei nicht angetriebenen Rädern, also typischerweise bei Rädern von Anhängern oder Aufliegern, werden, um keine Änderungen in der Anordnung zwischen Nabe und Achsstummel vornehmen zu müssen, Drehdurchführungen eingesetzt, die axial an den fahrzeugseitigen Achsstummel angeschlossen werden. Die Drehdurchführung selbst ist auch bei dieser Ausgestaltung konzentrisch ausgeführt. Der Stator einer solchen Drehdurchführung trägt an seinem zu dem Achsstummel weisenden Ende einen Abschnitt mit einem Schraubgewinde, mit dem dieser unter Zwischenschaltung eines Dichtringes stirnseitig in eine den Achsstummel axial durchgreifende und zumindest in dem freien Endbereich mit einem komplementären Innengewinde ausgerüstete Bohrung ein. Mit dem Stator der Drehdurchführung wird somit der Achsstummel in axialer Richtung verlängert. Durch die Verschraubung zwischen dem Stator und dem Achsstummel ist der Stator zugleich drehmomentschlüssig an den Achsstummel angeschlossen. Ist der Achsstummel an seinem freien Ende von einer Nabenkappe eingefasst, was die Regel sein dürfte, ist in dem Boden der Nabenkappe eine Öffnung eingebracht, in die der Rotor der Drehdurchführung eintaucht. In radialer Richtung ist zwischen dem Rotor der Drehdurchführung und der Innenseite der in die Nabenkappe eingebrachten Öffnung ein Ringspalt zu belassen, damit unter Berücksichtigung der einzuhaltenden Toleranzen und möglicher Verschleißerscheinungen eine Abstützung des Rotors an der Nabenkappe nicht erfolgt. Zum Abdichten dieses Ringspaltes dient eine umlaufende Lippendichtung, die an der radialen Außenseite des Rotors der Drehdurchführung und an der Stirnseite der Nabenkappe anliegt. Zum Schutze der Lippendichtung dient ein durch Klemmung an der Mantelfläche des Rotors gehaltener Schutzring. Hierdurch soll verhindert werden, dass Flüssigkeiten, insbesondere solche, die mit Druck aufgebracht werden, wie beispielsweise mittels eines Dampfstrahlreinigers, nicht in das Innere der Nabenkappe eindringen und dadurch die gewünschte Schmierung beeinträchtigen.

Aus EP 1 077 816 B1 ist eine gattungsgemäße Drehdurchführung bekannt, die über eine in axialer Richtung wirkende Steckverbindung an ein aus dem Achsstummel herausgeführtes Rohr angeschlossen ist. Aufgesteckt wird der Stator der Drehdurchführung auf das freie Ende dieses Rohres, welches an eine fahrzeugseitige Druckluftversorgung angeschlossen ist. Der Rotor ist an dem Stator gelagert und durchgreift eine axiale Durchbrechung der Nabenkappe, an der der Rotor unter Zwischenschaltung einer Dichtung reibschlüssig angeschlossen ist. Der Stator verfügt über einen Statorkanal. Dieser setzt sich in axialer Richtung fort in ein Drehdichtelement aus Graphit, welches drehmomentschlüssig in dem Rotor gehalten ist. Der von dem Statorrohr wegweisende Ausgang der Fortsetzung des Statorrohres mündet in einer Querbohrung, an die rotorseitig Anschlussverschraubungen zum Anschließen von Luftleitungen vorgesehen sind. Unter Vorspannung wirkt die Stirnfläche des Gleitdichtelementes gegen die Stirnfläche des Statorrohres. Diese Drehdurchführung ist für eine Verwendung in automatisierten Reifenbefüllsystemen zum Aufrechterhalten eines gewünschten Druckes vorgesehen. Dieses bedeutet, dass die Drehdurchführung während der Betriebsdauer des Fahrzeuges unter Druck steht. Nachteilig ist bei diesem Konzept jedoch, dass der Abrieb des Gleitdichtelementes an der Stirnfläche des Statorrohres zu Verschmutzungen innerhalb der Luftleitung und auch in den Lagern führen kann. Verschmutzungen, die in die Luftleitung eindringen, können die radseitigen Ventile beeinträchtigen, gegebenenfalls undicht werden lassen. Für den Betrieb dieser vorbekannten Reifendruckregelanlage ist dieses zwar nicht gewünscht, jedoch unerheblich, da die Drehdurchführung konstant mit dem gewünschten Reifendruck beaufschlagt ist.

Aus JP S57 97707 U ist eine Drehdurchführung mit einem Rotor mit abgedichteter Ringnut und einer Übertragungskammer bekannt. Im Unterschied zu der aus EP 1 077 816 B1 bekannt gewordenen Drehdurchführung ist beim Gegenstand der JP S57 97707 U der Stator unmittelbar am Achsstummel befestigt. Eine Steckkupplung wird beim Gegenstand dieses Standes der Technik nicht verwendet.

DE 10 2010 054 366 A1 offenbart eine Reifendruckregelanlage. Diese Reifendruckregelanlage umfasst einen Drehübertrager mit axialer und radialer Luftführung im Stator für zwei Anschlussleitungen. Auch bei diesem vorbekannten Übertrager ist der Stator Teil der Achse. Aus diesem Grunde wird eine Steckkupplung nicht benötigt.

Ausgehend von diesem diskutierten Stand der Technik liegt der Erfindung daher die Aufgabe zugrunde, eine eingangs genannte Drehdurchführung einer Reifendruckregelanlage dergestalt weiterzubilden, bei der insbesondere die zu dem Gegenstand der EP 1 077 816 B1 angesprochene Verschmutzungsproblematik reduziert ist und die sich auch für solche Anwendungen eignet, bei denen die Drehdurchführung nicht konstant unter Druck gestellt ist. Zudem wäre es wünschenswert, wenn eine Luftversorgung auch mit Abstand zur Drehachse des Rotors in den Stator eingekoppelt werden könnte.

Gelöst wird diese Aufgabe erfindungsgemäß durch eine eingangs genannte, gattungsgemäße Drehdurchführung, bei der der Rotor unter Belassung eines Ringspaltes konzentrisch zu dem Stator angeordnet ist und in dem Ringspalt wenigstens eine zum Zwecke einer Reifendruckänderung aktivierbare und wenn aktiviert in radialer Richtung gegen Stator und Rotor wirkende Ringdichtung zum Bereitstellen einer abgedichteten Übertragungskammer angeordnet ist, wobei sowohl der wenigstens eine rotorseitige Anschluss als auch der Fluidkanal des Stators in Fluidverbindung mit der Übertragungskammer stehen.

Bei dieser Drehdurchführung ist im Unterschied zu dem eingangs genannten Stand der Technik diese nicht am fahrzeugseitigen Achsstummel festgelegt, sondern an der drehbar gegenüber dem Achsstummel gelagerten Nabe. Bei dieser Drehdurchführung ist daher deren Rotor an der Nabe festgelegt, beispielsweise dadurch, dass der Rotor einen vorzugsweise umlaufenden Befestigungsflansch mit darin eingebrachten Befestigungsbohrungen aufweist und dieser Flansch unter Verwendung von Befestigungsschrauben unter Zwischenschaltung einer Dichtung an der fahrzeugseitigen Nabe befestigt ist. Sodann ist der Rotor an der das freie Ende des Achsstummels einfassenden Nabenkappe befestigt, die ihrerseits drehmomentschlüssig an die das Rad tragenden Nabe angeschlossen ist. Durch die Zwischenschaltung und Verspannung einer zwischen dem Rotor und beispielsweise der Stirnseite der Nabenkappe angeordnete Dichtung ist sichergestellt, dass selbst bei einer Hochdruckreinigung keinerlei Flüssigkeit in die Nabenkappe eindringt.

Von Vorteil ist bei der erfindungsgemäßen Drehdurchführung der Einsatz von aktivierbaren Ringdichtungen, die zum Bereitstellen einer Übertragungskammer, wenn aktiviert, in radialer Richtung gegen Rotor und Stator wirken. Hierdurch ist ein Verschleiß und ein Abrieb von den Dichtungen minimiert, da die Dichtungen nur dann die abgedichtete Übertragungskammer bereitstellen, wenn eine Reifendruckregelung vorgenommen werden soll. Daher eignet sich diese Drehdurchführung vor allem für solche Anwendungszwecke, bei denen der Reifendruck geregelt, jedoch nicht notwendigerweise kontinuierlich überwacht werden muss, wie dieses beispielsweise bei landwirtschaftlichen Fahrzeugen der Fall ist. Bei diesem Konzept kann die Übertragungskammer in radialer Anordnung zwischen Stator und Rotor vorgesehen sein, wodurch der Bauraum in axialer Richtung einer solchen Drehdurchführung relativ kurz gehalten werden kann. Dieses ist gerade bei einem Einsatz derartiger Drehdurchführungen im landwirtschaftlichen Bereich von Vorteil, da dann die Gefahr eines Abrisses der Drehdurchführung durch unbeabsichtigten Kontakt an feststehenden Gegenständen beim Fahren des Fahrzeuges weitgehend vermieden ist.

Das Vorsehen radial wirkender Ringdichtungen zum Bereitstellen zumindest einer Übertragungskammer erlaubt zudem, dass der Anschluss des Stators an die fahrzeugseitige Luftversorgung hinsichtlich der Längsachse der Steckkupplung von der Drehachse des Rotors und damit der Drehachse des Rades beabstandet sein kann. Dieses ist für manche Anwendungsfälle sinnvoll, bei denen ein axialer, den Achsstummel durchgreifender Kanal nicht möglich oder für andere Anwendungen vorgehalten werden muss, sein.

Das vorbeschriebene Konzept erlaubt zudem die Ausbildung von zwei oder auch mehreren Übertragungskammern, die in einfacher Weise dadurch bereitgestellt werden können, dass zwischen Rotor und Stator mit axialem Abstand voneinander mehrere aktivierbare Ringdichtungen angeordnet sind. Zwischen zwei Ringdichtungen befindet sich sodann jeweils eine Übertragungskammer. Eine solche Drehdurchführung kann somit zwei- oder auch mehrkanalig ausgelegt sein.

Das Vorsehen von aktivierbaren Ringdichtungen, die, wenn aktiviert, zum Bereitstellen einer abgedichteten Übertragungskammer in radialer Richtung gegen Rotor und Stator wirken, erlaubt die Bereitstellung nicht nur einer oder auch mehrerer radialer Übertragungskammern, die als Ringkammern ausgebildet sind, sondern man kann zudem einen Zwischenraum zwischen dem stirnseitigen Ende des Stators und der diesbezüglich mit Abstand angeordneten Wand des Rotors nutzen, um auch an dieser Stelle eine Übertragungskammer auszubilden. Zum Abdichten dieser Übertragungskammer wird nur eine Ringdichtung benötigt.

Eingesetzt werden vorzugsweise solche aktivierbaren Ringdichtungen, die durch den in der angeschlossenen Luftleitung herrschenden Druck aktiviert werden. Hierbei kann es sich beispielsweise um lippenartige Ringdichtungen handeln, die mit ihrer größeren Oberflächenseite in Richtung zur Übertragungskammer weisen. Ein typischer Querschnitt einer solchen aktivierbaren Ringdichtung ist U-förmig, wobei die Öffnung einer solchen Ringdichtung zur Übertragungskammer weist. Eine solche Ringdichtung ist mit ihrem Rücken abgestützt. Bei einer Druckbeaufschlagung der Übertragungskammer wirkt dieser zwischen die Schenkel der U-förmigen Ringdichtung, die sodann bestrebt sind, auseinander gedrückt zu werden, wodurch die gewünschte Abdichtung gegenüber dem Rotor - einerseits - und dem Stator - andererseits - erfolgt.

Bei dieser Drehdurchführung erfolgt der Anschluss des Stators an die fahrzeugseitige Druckluftversorgung über eine Steckkupplung, und zwar eine solche, deren Steckkupplungsteile in axialer Richtung in Bezug auf die Drehachse der Nabe gegenüber dem Achsstummel miteinander in Eingriff stellbar sind. Durch diese Maßnahme ist bei dieser Drehdurchführung eine fahrzeugseitige Montage nicht nur deutlich vereinfacht. Zudem erlaubt ein solches Kupplungskonzept, dass im Falle einer Beaufschlagung der Drehdurchführung mit mehreren Leitungen, beispielsweise bei einer zweikanaligen Drehdurchführung mit einer Arbeitsleitung und einer Steuerleitung, dass diese nicht unbedingt konzentrisch zueinander, sondern durchaus auch nebeneinander angeordnet sein können. Dasselbe gilt auch für eine Ausgestaltung, bei der mehr als zwei Leitungen der Drehdurchführung zugeführt werden.

Ein Toleranzausgleich in radialer Richtung wird bei dieser Drehdurchführung zumindest teilweise vorzugsweise unter Ausnutzung der elastischen Eigenschaften der an der Steckkupplung beteiligten Dichtungen bereitgestellt. Hierbei kann es sich beispielsweise um O-Ringe handeln. Anstelle oder auch ergänzend hierzu ist es auch möglich, das Kupplungsrohr als Teil einer solchen Steckkupplung aus einem Material mit gewissen elastischen Eigenschaften herzustellen, etwa einem Kunststoff. Hierfür eignet sich beispielsweise ein Rohr aus einem PTFE- Material. Wenn im Rahmen der Ausführungen das Kupplungsrohr als Teil der Steckkupplung angesprochen ist, sind unter diesem Begriff nicht nur starre Rohre zu subsumieren, sondern auch flexible Rohre (Schläuche). Bei einem Einsatz eines Kupplungsrohres als Teil der Steckkupplung aus einem PTFE-Material handelt es sich somit um ein flexibles Rohrstück. Bei Einsatz eines flexiblen Kupplungsrohres können Toleranzen oder verschleißbedingte Änderungen in radialer Richtung ohne weiteres kompensiert werden.

In Abhängigkeit davon, wie stramm die miteinander in Eingriff zu stellenden Steckkupplungsteile bei ihrer In-Eingriff-Stellung miteinander in Eingriff gestellt sind, kann dieses bereits ausreichen, den Stator drehmomentschlüssig an den fahrzeugseitigen Achsstummel anzuschließen. Ein solcher Anschluss erfolgt sodann reibschlüssig. Anstelle oder ergänzend zu einem drehmomentschlüssigen Anschluss des Stators der Drehdurchführung an den Achsstummel kann eine Drehmomentstütze verwendet werden, die eine formschlüssige Drehmomentübertragung von dem Stator an den Achsstummel gewährleistet, durch die mithin der Stator von dem Rotor bei einer Drehung des Rades in Bezug auf die Drehbewegung entkoppelt wird. Bei einer solchen Drehmomentstütze kann es sich beispielsweise um eine bügelartig ausgebildete handeln, die mit ihrem einen Schenkel an der Stirnseite des Stators befestigt ist und deren anderes Ende drehmomentschlüssig in eine Aufnahme des Achsstummels eingreift. Gemäß einer bevorzugten Ausgestaltung ist dieser Schenkel der Drehmomentstütze ausgelegt, um in eine in die zylindrische Mantelfläche des endseitigen Gewindeabschnitts des Achsstummels ohnehin vorhandene und sich in axialer Richtung erstreckende Nut einzugreifen. Zur Gewährleistung eines Eingriffes dieses Schenkels einer solchen bügelartigen Drehmomentstütze ist in einer Weiterbildung vorgesehen, dass das freie Ende des in die vorbeschriebene Nut eingreifenden Schenkels sich bis unter eine auf diesen Gewindeabschnitt des Achsstummels aufgeschraubte Sicherungsmutter erstreckt.

Für den Fall, dass zumindest eine Luftzuführleitung mit Abstand zur Drehachse dem Stator zugeführt wird, ist bereits durch diese Maßnahme eine Drehmomentstütze bereitgestellt.

Grundsätzlich kann das dem Stator der Drehdurchführung zugeordnete Steckkupplungsteil eine rohrartige Verlängerung des Stators in Richtung zu dem Achsstummel sein. Achsstummelseitig greift dieses Steckkupplungsteil sodann in eine Kupplungsrohraufnahme ein, in der auf die Mantelfläche des darin eingeführten Kupplungsrohres eine oder auch mehrere umlaufende Dichtungen, beispielsweise als O-Ringe ausgeführt, wirken. Sollen jedoch größere Toleranzen und/oder Verschleißerscheinungen mittels des Kupplungsrohres kompensiert werden, ist gemäß einer Ausgestaltung vorgesehen, dass der Stator der Drehdurchführung eine sich in axialer Richtung erstreckende Kupplungsrohraufnahme mit einer auf die Mantelfläche eines darin eingesetzten Kupplungsrohres wirkenden Manteldichtung aufweist. Auch an dieser Stelle kann die Manteldichtung ein oder mehrere Dichtungselemente, typischerweise ebenfalls O-Ringe, aufweisen. Zudem kann das Kupplungsrohr als flexibles Rohr ausgeführt sein. Vorzugsweise ist bei einer solchen Ausgestaltung der Drehdurchführung die Kupplungsrohraufnahme des Stators mit einem stirnseitigen Anschlag für das Kupplungsrohr ausgestattet, um sicher zu stellen, dass dieses bei einer Montage der Drehdurchführung an der fahrzeugseitigen Nabe das Kupplungsrohr tief genug in die achsstummelseitige Kupplungsrohraufnahme eingeschoben wird. Ein solches Kupplungsrohr, was mit seinem einen Ende in einer Kupplungsrohraufnahme des Stators und mit seinem anderen Ende in eine Kupplungsrohraufnahme des Achsstummels eingreift, kann dieses als Kupplungsteil sowohl dem Stator als auch dem Achsstummel zugeordnet sein, bevor die Drehdurchführung montiert wird.

In einer anderen Ausgestaltung bildet das freie Ende eines flexiblen Rohres, beispielsweise eines PTFE-Schlauches, welches den Achsstummel insgesamt durchgreift und mit seinem anderen Ende an die fahrzeugseitige Luftversorgung angeschlossen bzw. anschließbar ist, mit dem aus dem Achsstummel heraustretenden Ende das Kupplungsrohr. Bei einer Montage der Drehdurchführung an die fahrzeugseitige Nabe wird sodann dieses Kupplungsrohr in die statorseitige Kupplungsrohraufnahme eingeführt.

Nachfolgend ist die Erfindung anhand von Ausführungsbeispielen unter Bezugnahme auf die beigefügten Figuren beschrieben. Es zeigen:
- **Fig. 1:**: Eine perspektivische Ansicht einer an einer fahrzeugseitigen Nabe angeschlossenen Drehdurchführung,
- **Fig. 2:**: eine Längsschnittdarstellung durch die an die Nabe angeschlossene Drehdurchführung der Figur 1,
- **Fig. 3:**: eine vergrößerte Darstellung der Drehdurchführung der Figur 2,
- **Fig. 3a:**: eine vergrößerte Darstellung einer Druckdichtung der Drehdurchführung,
- **Fig. 4:**: eine Darstellung der an die fahrzeugseitige Nabe angeschlossenen Drehdurchführung in einer um 90 Grad gegenüber der Schnittebene der Figur 3 gedrehten Schnittebene,
- **Fig. 5:**: eine Längsschnittdarstellung durch eine Drehdurchführung gemäß einer weiteren Ausgestaltung,
- **Fig. 6:**: eine Längsschnittdarstellung durch eine weitere erfindungsgemäße Drehdurchführung und
- **Fig. 7:**: eine Längsschnittdarstellung durch eine Drehdurchführung der vorgenannten Art mit einer darin eingebrachten Weiterbildung.

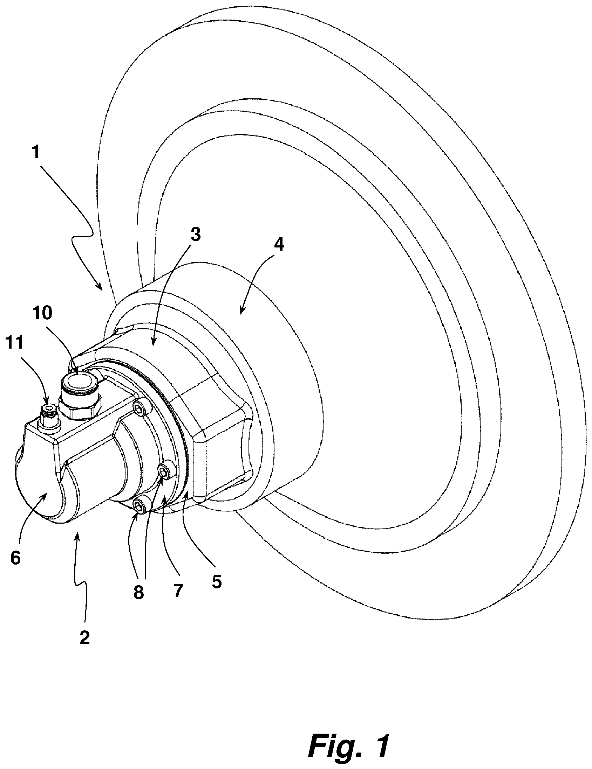

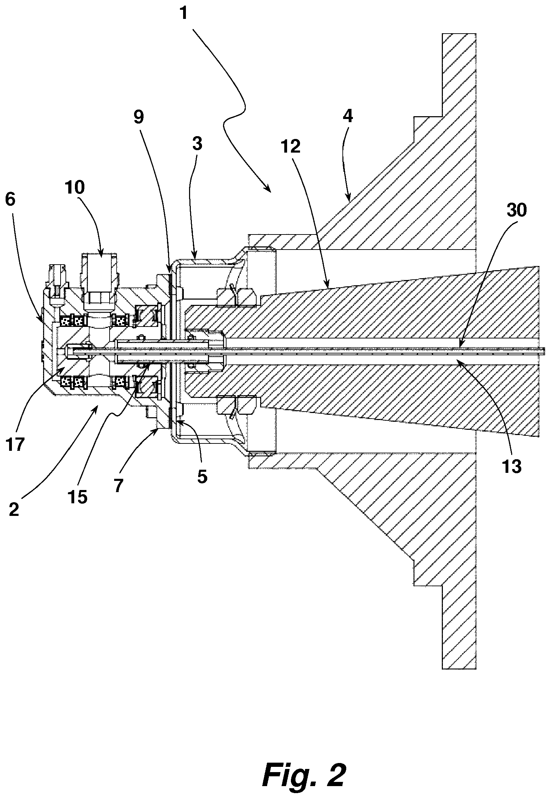

An eine Nabe 1 eines im Übrigen nicht näher dargestellten Fahrzeuges, bei dem es sich bei dem dargestellten Ausführungsbeispiel um einen landwirtschaftlichen Anhänger handelt, ist eine Drehdurchführung 2 einer Reifendruckregelanlage angeschlossen. Die Drehdurchführung 2 dient zum Herstellen einer Fluidverbindung zwischen einer fahrzeugseitigen Luftversorgung und dem Inneren eines Reifens, der auf einem an die Nabe 1 angeschlossenen Rad sitzt. Bei dem dargestellten Ausführungsbeispiel ist Teil der Nabe 1 eine Nabenkappe 3. Diese ist in an sich bekannter Art und Weise mit der eigentlichen Radnabe 4 verschraubt. Die Nabenkappe 3 fasst das freie Ende eines Achsstummels ein, auf dem die Radnabe 4 gelagert ist. Bei der Nabenkappe 3 handelt es sich um eine herkömmliche Nabenkappe, in deren Boden 5 eine zentrische Durchbrechung eingebracht ist. Diese Durchbrechung dient zum Durchführen eines Steckkupplungsteils der Drehdurchführung 2, wie dieses nachstehend beschrieben ist. Das in Figur 1 erkennbare Gehäuse 6 der Drehdurchführung 2 bildet den Rotor. Dieser trägt an seiner zu der Nabe 1 weisenden Anschlussseite einen Befestigungsflansch 7, in den mehrere, typischerweise mit gleichem Winkelabstand zueinander angeordnete Befestigungsbohrungen eingebracht sind. Diese dienen dem Zweck, dass die Drehdurchführung 2 mittels Schrauben 8, die diese Befestigungsbohrungen durchgreifen, an dem Boden 5 der Nabenkappe 3 verschraubt und auf diese Weise daran befestigt werden kann. Zwischen der zu dem Boden 5 der Nabenkappe 3 weisenden Seite des Befestigungsflansches 7 und der Nabenkappe 3 ist eine Dichtung 9 (s. Figur 2) eingeschaltet. Diese ist zwischen den beiden Widerlagern - Boden 5 der Nabenkappe und zu dem Boden 5 weisende Seite des Befestigungsflansches 7 - verspannt. Aufgrund dieses Anschlusses ist der Rotor 6 der Drehdurchführung 2 abgedichtet an die Drehbewegung der Nabe 1 angeschlossen. Dieser abgedichtete Anschluss hält auch höchsten Beanspruchungen stand. Selbst eine Behandlung der Drehdurchführung 2 und der Nabe 1 mit einem Hochdruckreiniger führt nicht dazu, dass durch die eingespannte Dichtung Reinigungsflüssigkeit in das Innere der Nabenkappe 3 eindringt.

Die Drehdurchführung 2 ist bei dem dargestellten Ausführungsbeispiel zweikanalig ausgelegt. Aus diesem Grunde verfügt die Drehdurchführung 2 über zwei reifenseitige Anschlüsse 10, 11. Der Anschluss 10 des Rotors 6 dient zum Anschließen einer Arbeitsluftleitung, mit der der Rotor 6 mit einem Reifenventil verbunden ist. Der Anschluss 11 dient zum Anschließen einer Steuerleitung zum Steuern eines Radventils.

Der Aufbau der Drehdurchführung 2 ist nachfolgend anhand der Figuren 2 bis 4 beschrieben. Die Radnabe 4 als Teil der Nabe 2 ist in nicht näher dargestellter Art und Weise auf dem in Figur 2 dargestellten Achsstummel 12 gelagert. Der Achsstummel 12 ist das freie Ende einer Achse, die durchaus auch als durchgehende Achse ausgebildet sein kann. In den Achsstummel 12 ist eine zentrische Bohrung 13 eingebracht, die am freien Ende des Achsstummels 12 mündet. Die Bohrung 13 ist in nicht näher dargestellter Art und Weise fahrzeugseitig an eine Luftversorgung, insbesondere eine Druckluftversorgung angeschlossen. In das freie stirnseitige Ende ist in die Bohrung 13 eine Muffe 14 als Teil einer Steckkupplung eingeschraubt. Der Innendurchmesser der Muffe 14 ist unter Ausbildung eines in Richtung zu dem Achsstummel 12 wirkenden Anschlages 15 gestuft ausgeführt. In dem im Durchmesser größeren, zu dem freien Ende des Achsstummels 12 weisenden Abschnitt der Muffe 14 ist in einer umlaufenden Nut ein bei dem dargestellten Ausführungsbeispiel als O-Ring ausgeführter Dichtring 16 eingesetzt.

Die Drehdurchführung 2 umfasst innerhalb des als Gehäuse ausgebildeten Rotors 6 einen darin gelagerten Stator 17. Der Stator 17 verfügt über eine axiale Bohrung, die eine Statorkammer 18 bildet. Teil der Statorkammer 18 ist eine Querbohrung 19. Diese ist bei dem dargestellten Ausführungsbeispiel in radialer Richtung mit der Längsachse des Anschlusses 10 fluchtende ausgeführt. Der Durchmesser des zylindrischen Stators 17 ist ausgeführt, dass zwischen seiner Mantelfläche und der zylindrischen Innenfläche des Rotors 6 eine umlaufende Übertragungskammer 20 ausgebildet ist. Diese dient zum Übertragen von in die Statorkammer 18 eingebrachten Luft in den Anschluss 10 und umgekehrt, falls erforderlich. Zum Abdichten der Übertragungskammer 20, in der Arbeitsluft von der Statorkammer 18 in den Anschluss 10 (oder umgekehrt) eingebracht wird, dienen aktivierbare Druckdichtungen 21. Bei den Druckdichtungen 21 handelt es sich um Druckdichtungen, die, wenn druckbeaufschlagt, die Übertragungskammer 20 für die gewünschte Luftübertragung abdichten. Aktiviert werden diese Dichtungen 21 nur, wenn durch die Übertragungskammer 20 Luft von der Statorkammer 18 in den Anschluss 10 oder umgekehrt gefördert werden soll, mithin die Übertragungskammer 20 unter Druck gestellt ist.

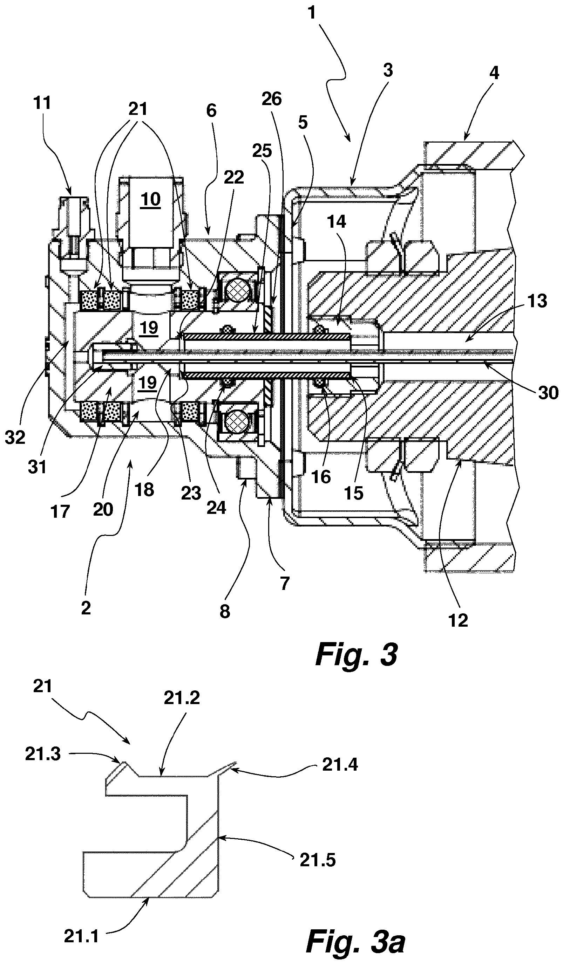

Figur 3a zeigt in einer vergrößerten Darstellung eine der Druckdichtungen 21 der Figur 3. Bei diesen aktivierbaren Druckdichtungen 21 handelt es sich um Ringdichtungen mit einer U-förmigen Querschnittsgeometrie. Die offene Seite einer solchen Dichtung 21 weist in Richtung zu der Übertragungskammer 20. Die Dichtung 21 liegt mit ihrem einen Schenkel 21.1 an der inneren Oberfläche des Rotors 6 an, während die nach außen weisende Seite des anderen Schenkels 21.2 an der Mantelfläche des Stators 17 anliegt bzw. mit einem geringen Spiel zu der Mantelfläche des Stators angeordnet ist. Die zu dem Stator 17 weisende Seite des Schenkels 21.2 ist durch zwei Lippen 21.3, 21.4 strukturiert. Mit seinem Rücken 21.5 ist die Dichtung 21 jeweils an einem in dem Rotor festgesetzten Ring in axialer Richtung abgestützt. Somit stellt ein solcher Ring das Widerlager bei einer Druckbeaufschlagung der Übertragungskammer dar. Bei einer Druckbeaufschlagung der Übertragungskammer 20 wirkt der in der Übertragungskammer 20 befindliche Druck gegen die zueinander weisenden Seiten der beiden Schenkel 21.1, 21.2 und drückt diese in radialer Richtung zum Einen gegen die Mantelfläche des Rotors 6 (der Schenkel 21.1) und andererseits gegen die Mantelfläche des Stators 17 (der Schenkel 21.2 mit seinen Lippen 21.3, 21.4). Ausgenutzt wird bei diesem Konzept die relativ größere Oberfläche der in Richtung zur Übertragungskammer 20 und damit zu der druckbeaufschlagten Seite der Dichtung 21.

In der Kupplungsrohraufnahme 22 ist innerhalb einer umlaufenden Nut ein O-Ring als Dichtring 24 eingesetzt. In den Stator 17 ist in Verlängerung seiner Statorkammer 18 eine Kupplungsrohraufnahme 22 eingebracht. Der Übergang von der Kupplungsrohraufnahme 22 zu der Statorkammer 18 ist unter Verringerung der lichten Weite gestuft ausgeführt, sodass auch an dieser Stelle ein Anschlag 23 ausgebildet ist. Zum Herstellen einer Fluidverbindung zwischen der Bohrung 13 und der Statorkammer 18 dient bei dem dargestellten Ausführungsbeispiel ein flexibles Kupplungsrohr 25 aus PTFE (Polytetrafluorethylen). Der Außendurchmesser des Kupplungsrohrs 25 ist so gewählt, dass dieses in die beiden O-Ringe 16, 24 eingeschoben werden kann und diese somit als Manteldichtungen wirkenden O-Ringe 15, 24 unter Vorspannung an der Außenseite des eingeschobenen Kupplungsrohrs 25 anliegen. Auf diese Weise ist eine abgedichtete Fluidverbindung zwischen der Bohrung 13 und der Statorkammer 18 hergestellt.

Bei dem dargestellten Ausführungsbeispiel ist somit eine Fluidverbindung zwischen der Bohrung 13 als fahrzeugseitige Wegsamkeit für eine Fluidverbindung und der Drehdurchführung 2 im Wege einer Steckkupplung realisiert, deren Kupplungsteile - die Kupplungsrohraufnahme 22, das Kupplungsrohr 25 und die Kupplungsrohraufnahme der Muffe 14 - durch eine in axialer Richtung ausgeführte Steckverbindung miteinander in Eingriff gestellt werden. Das Kupplungsrohr 25 kann entweder dem Stator 17 oder der Muffe 14 zugeordnet sein, damit das jeweils das Kupplungsrohr 25 umfassende Steckkupplungsteil komplementär zu dem anderen Steckkupplungsteil ausgeführt ist.

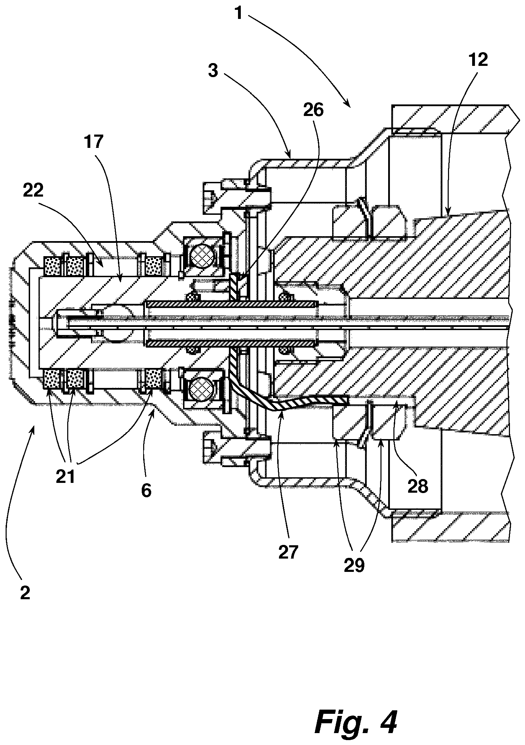

An die Stirnseite des Stators 17 ist bei dem dargestellten Ausführungsbeispiel eine Drehmomentstütze 26 angeschlossen. In Figur 3 ist nur der an der Stirnseite des Stators 17 anliegende Schenkel der Drehmomentstütze 26 erkennbar. Die Drehmomentstütze 26 ist bügelartig ausgeführt, und zwar bei dem dargestellten Ausführungsbeispiel nach Art eines Federbügels. Die Ausführung nach Art eines Federbügels bezieht sich nicht nur auf die Form, sondern beinhaltet auch, dass die Drehmomentstütze 26 des dargestellten Ausführungsbeispiels aus einem Federstahl hergestellt ist. Figur 4 zeigt den anderen, in Figur 3 nicht sichtbaren Schenkel 27 der Drehmomentstütze 26. Dieser greift in eine in die Mantelfläche des Achsstummels 12 eingebrachte und seiner Längserstreckung folgenden Nut 28 ein. Diese Nut 28 ist ohnehin im Achsstummel 12 vorgesehen. Mithin wird diese für den Eingriff des Schenkels 27 nur zusätzlich genutzt. Die Nut 28 befindet sich in demjenigen Gewindeabschnitt des Achsstummels 12, auf dem Sicherungsmuttern 29 sitzen. Der Schenkel 27 erstreckt sich bis unter die dem stirnseitigen Abschluss des Achsstummels 12 nähere Sicherungsmutter 29. Die Nut 28 ist in Umfangsrichtung des Achsstummels durch Wände begrenzt. Auf diese Weise ist der Stator 17 drehmomentschlüssig an den Achsstummel 12 angeschlossen. Eine Ausführung einer solchen Drehmomentstütze in anderer Weise, wie beispielsweise ein in eine Bohrung des Stators und in eine Bohrung im Achsstummel eingreifenden Stift sind ebenfalls denkbar.

Die Drehdurchführung 2 ist, wie bereits angesprochen, zweikanalig ausgeführt. Durch die Bohrung 13, das Kupplungsrohr 25 und die Statorkammer 18 ist ein flexibles Rohr 30 als Steuerleitung hindurchgeführt. Mit seinem freien Ende greift dieses in eine Anschlussmuffe 31 des Stators 17 ein. Für die durch das flexible Rohr 30 bereitgestellte Luftwegsamkeit befindet sich die Übertragungskammer 32 stirnseitig zum Stator 17.

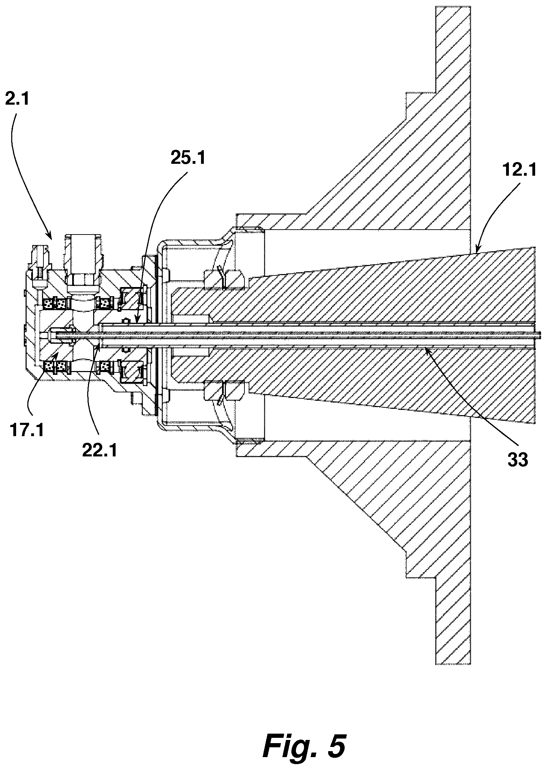

Figur 5 zeigt ein weiteres Ausführungsbeispiel einer Drehdurchführung 2.1, die grundsätzlich ebenso aufgebaut ist, wie die Drehdurchführung 2 der vorangegangenen Figuren. Deshalb gelten die vorstehenden Ausführungen zu der Drehdurchführung 2 gleichermaßen für die Drehdurchführung 2.1 der Figur 5. Die Drehdurchführung 2.1 unterscheidet sich von der zuvor beschriebenen Drehdurchführung 2 dadurch, dass das Kupplungsrohr 25.1, welches in die Kupplungsrohraufnahme 22.1 des Stators 17.1 eingreift, das freie Ende eines insgesamt den Achsstummel 12 durchgreifenden flexiblen Rohrs 33 ist.

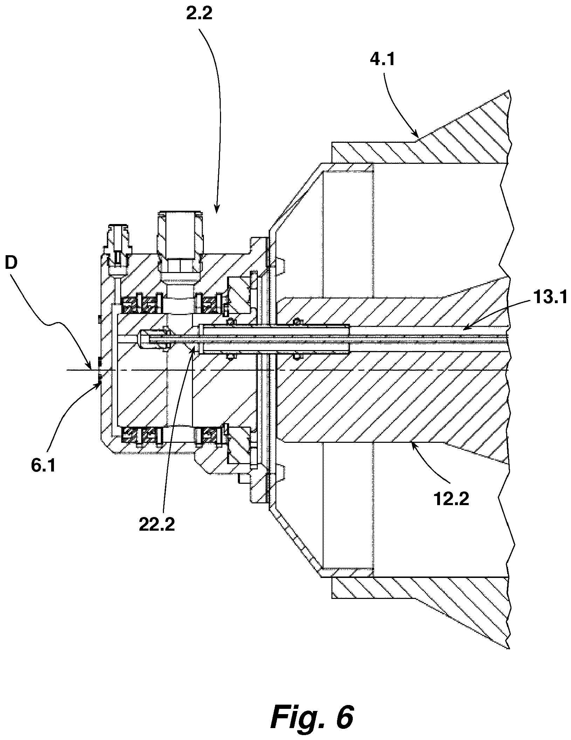

Figur 6 zeigt noch ein weiteres Ausführungsbeispiel einer Drehdurchführung 2.2. Die Drehdurchführung 2.2 ist prinzipiell aufgebaut wie die bereits vorbeschriebene Drehdurchführung 2. Die Drehdurchführung 2.2 unterscheidet sich von der Drehdurchführung 2 dadurch, dass die den Achsstummel 12.2 durchgreifende Bohrung 13.1 mit Abstand zur Drehachse D des Rotors 6.1 bzw. der Radnabe 4.1 und somit exzentrisch angeordnet ist. Die Konzeption der erfindungsgemäßen Drehdurchführung gestattet eine Ausgestaltung, bei der eine solche Bohrung über eine Steckverbindung statorseitig bezüglich der Drehdurchführung 2.2 angeschlossen werden kann. Dementsprechend ist die Kupplungsrohraufnahme 22.1 bei dieser Drehdurchführung 2.2 ebenfalls exzentrisch angeordnet.

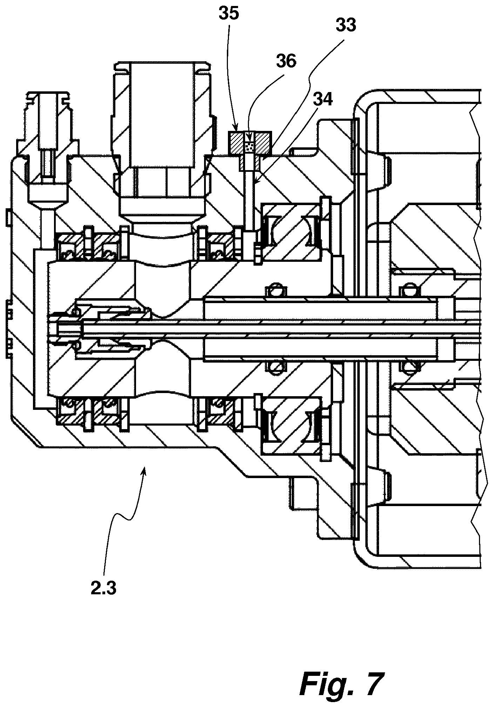

Figur 7 zeigt eine Drehdurchführung 2.3, wie diese prinzipiell der Drehdurchführung der Figuren 2 und 3 entspricht. Nachstehend wird zu dem Ausführungsbeispiel der Figur 7 nur auf die diesbezüglichen Unterschiede eingegangen.

Die in Figur 7 dargestellte Drehdurchführung 2.3 verfügt neben den bereits vorbeschriebenen Merkmalen über eine Entlüftungswegsamkeit 33. Die Entlüftungswegsamkeit 33 dient einer Entlüftung der Drehübertragung nach außen, um unter Umständen vorhandenen oder eintretenden Undichtigkeiten der Dichtungen noch vor Eintritt von durch die Undichtigkeiten eingetragenen Mediums in die Achslagerung dieses nach außen abzuführen. Die Entlüftungswegsamkeit 33 ist durch eine Entlüftungsbohrung 34 und einen Verschlusskörper 35 bereitgestellt. Bei dem Verschlusskörper 35 handelt es sich um ein Schraubenteil, welches mit einem Gewindeschaft in die Entlüftungsbohrung 34 eingreift. Der Verschlusskörper 35 trägt eine semipermeable Membran 36, durch die eine Wegsamkeit durch die Entlüftungsbohrung 34 in die Außenumgebung möglich ist, nicht jedoch in die andere Richtung. Damit kommt der Membran 36 die Funktion eines Rückschlagventils zu, ohne jedoch einen Öffnungsdruck überwinden zu müssen.

Ein solcher exzentrischer Luftversorgungsanschluss ist bei landwirtschaftlich genutzten Fahrzeugen unproblematisch, da die Raddrehgeschwindigkeiten relativ gering sind, so dass eine mögliche dadurch entstehende Unwucht unproblematisch ist und nicht durch andere Maßnahmen kompensiert werden muss.

Aus der Beschreibung der Erfindung wird deutlich, dass durch den Anschluss des Stators der Drehdurchführung an den Achsstummel die Drehdurchführung somit schwimmend gegenüber der Radnabe gehalten ist. Aufgrund dieses Anschlusses ist ein radialer Versatz und/oder ein axiales Spiel zwischen Radnabe und Achsstummel ohne Bedeutung, jedenfalls nicht im Rahmen eines üblichen Verschleißes.

In einer Weiterbildung ist vorgesehen, dass der Rotor mit seiner Anschlussseite gleichfalls die Funktion der in der Figurenbeschreibung beschriebenen Nabenkappe übernehmen kann.

Es ist bereits herausgestellt worden, dass aufgrund der axial ausgeführten Steckverbindung zwischen der Luftzufuhr des Stators und seinem Anschluss an eine durch den Achsstummel geführten Versorgung auch ein Anschluss an mehrere, nicht konzentrisch zueinander angeordnete Leitungen möglich ist. Gleiches gilt auch für eine Ausgestaltung, bei der der Druckluftleitungsanschluss an den Achsstummel nicht zentrisch, also in Achsmitte, vorgesehen sein muss, möglich.

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungen, die Erfindung verwirklichen zu können.

**Bezugszeichenliste**

| | | | |
|---|---|---|---|
| 1 | Nabe | 29 | Sicherungsmutter |
| 2, 2.1, 2.2, 2.3 | Drehdurchführung | 30 | Rohr |
| 3 | Nabenkappe | 31 | Muffe |
| 4, 4.1 | Radnabe | 32 | Übertragungskammer |
| 5 | Boden | 33 | Entlüftungswegsamkeit |
| 6 | Gehäuse/Rotor | 34 | Entlüftungsbohrung |
| 7 | Befestigungsflansch | 35 | Verschlusskörper |
| 8 | Schraube | 36 | Membran |
| 9 | Dichtring | D | Drehachse |
| 10 | Anschluss | | |
| 11 | Anschluss | | |
| 12, 12.1, 12.2 | Achsstummel | | |
| 13, 13.1 | Bohrung | | |
| 14 | Muffe | | |
| 15 | Anschlag | | |
| 16 | Dichtring | | |
| 17, 17.1 | Stator | | |
| 18 | Statorkammer | | |
| 19 | Querbohrung | | |
| 20 | Übertragungskammer | | |
| 21 | Druckdichtung | | |
| 21.1 | Schenkel | | |
| 21.2 | Schenkel | | |
| 21.3 | Lippe | | |
| 21.4 | Lippe | | |
| 21.5 | Rücken | | |
| 22, 22.1, 22.2 | Kupplungsrohraufnahme | | |
| 23 | Anschlag | | |
| 24 | Dichtring | | |
| 25, 25.1 | Kupplungsrohr | | |
| 26 | Drehmomentstütze | | |
| 27 | Schenkel | | |
| 28 | Nut | | |

## Patentansprüche

1. Drehdurchführung einer Reifendruckregelanlage zur Übertragung von Luft aus dem Bereich einer Achse eines Fahrzeuges an ein auf einer Nabe (1) sitzendes Rad, welche Drehdurchführung (2, 2.1, 2.2., 2.3)
- einen mit einem Fluidkanal in axialer Richtung an eine fahrzeugseitige, durch einen Achsstummel (12, 12.1) geführte Luftversorgungsleitung anschließbaren Stator (17, 17.1) sowie einen konzentrisch zu dem Stator (17, 17.1) angeordneten Rotor (6) mit wenigstens einem Anschluss (10) zum Herstellen einer Fluidverbindung mit einem Radventil aufweist,
- über Mittel zu ihrer fahrzeugseitigen Befestigung verfügt, welche Befestigungsmittel (8) ausgelegt sind, den Rotor (6) der Drehdurchführung unter Zwischenschaltung einer Dichtung (9) an die drehbar gegenüber dem Achsstummel (12, 12.1) gelagerte Nabe (1) anzuschließen, und
- ein erstes Teil einer in axialer Richtung in Eingriff zu stellenden Steckkupplung (22, 25) umfasst, dessen komplementäres Steckkupplungsteil (14, 30) einem das bezüglich seines Reifendruckes zu regelnde Rad tragenden Achsstummel (12, 12.1) zugeordnet ist,
**dadurch gekennzeichnet, dass** der Rotor (6) unter Belassung eines Ringspaltes konzentrisch zu dem Stator (17, 17.1) angeordnet ist und in dem Ringspalt wenigstens eine zum Zwecke einer Reifendruckänderung aktivierbare und wenn aktiviert in radialer Richtung gegen Stator (17, 17.1) und Rotor (6) wirkende Ringdichtung (21) zum Bereitstellen einer abgedichteten Übertragungskammer (20, 32) angeordnet ist, wobei sowohl der wenigstens eine rotorseitige Anschluss als auch der Fluidkanal des Stators (17, 17.1) in Fluidverbindung mit der Übertragungskammer (20, 32) stehen.

2. Drehdurchführung nach Anspruch 1, **dadurch gekennzeichnet, dass** zur Ausbildung von zumindest zwei Übertragungskammern (20, 32) in dem Ringspalt mehrere aktivierbare Ringdichtungen (21) angeordnet sind, wobei zumindest eine Übertragungskammer in axialer Richtung durch je eine Ringdichtung (21) begrenzt ist.

3. Drehdurchführung nach Anspruch 1 oder 2, **dadurch gekennzeichnet, dass** wenigstens ein Steckkupplungsteil des Stators mit seiner Längsachse mit radialem Abstand zur Drehachse des Rotors angeordnet ist.

4. Drehdurchführung nach Anspruch 2 und 3, **dadurch gekennzeichnet, dass** der Stator der Drehdurchführung eine der Anzahl der Übertragungskammern entsprechende Anzahl an benachbart zueinander angeordneten Steckkupplungsteilen aufweist.

5. Drehdurchführung nach einem der Ansprüche 1 bis 4, **dadurch gekennzeichnet, dass** der Stator (17) der Drehdurchführung (2) eine zum Anschließen an den fahrzeugseitigen Achsstummel (12) dienende Drehmomentstütze (26) trägt.

6. Drehdurchführung nach Anspruch 5, **dadurch gekennzeichnet, dass** die Drehmomentstütze (26) als Bügel, insbesondere als Federbügel zum Eingreifen in eine in axialer Richtung verlaufende Nut (28) des fahrzeugseitigen Achsstummels (12) ausgeführt ist.

7. Drehdurchführung nach einem der Ansprüche 1 bis 6, **dadurch gekennzeichnet, dass** das der Drehdurchführung zugeordnete Steckkupplungsteil ein Kupplungsrohr (25) ist.

8. Drehdurchführung nach einem der Ansprüche 1 bis 6, **dadurch gekennzeichnet, dass** der Stator (17, 17.1) der Drehdurchführung (2, 2.1) als Steckkupplungsteil eine sich in axialer Richtung erstreckende Kupplungsrohraufnahme (22, 22.1) mit einer gegenüber einem darin eingesetztes Kupplungsrohr (25, 25.1) wirkenden Manteldichtung aufweist.

9. Drehdurchführung nach Anspruch 8, **dadurch gekennzeichnet, dass** in der Kupplungsrohraufnahme (22, 22.1) ein stirnseitiger Anschlag (23) für das darin eingesetzte bzw. das darin einzusetzende Kupplungsrohr (25, 25.1) ausgebildet ist.

10. Drehdurchführung nach Anspruch 9, **dadurch gekennzeichnet, dass** der Drehdurchführung (2) ein Kupplungsrohr (25) zugeordnet ist, das mit seinem einen Ende in die statorseitige Kupplungsrohraufnahme (22) eingreift und dessen anderes Ende in eine zu dem Kupplungsrohrende komplementäre Kupplungsrohraufnahme eines fahrzeugseitigen Achsstummels (12) abgedichtet eingreift.

11. Drehdurchführung nach Anspruch 8, **dadurch gekennzeichnet, dass** das zu dem Steckkupplungsteil der Drehdurchführung (2.1) komplementäre Steckkupplungsteil der Endabschnitt eines aus dem fahrzeugseitigen Achsstummel (12.1) herausgeführten und mit seinem anderen Ende an eine Luftversorgung angeschlossenen Rohres (25.1) ist.

12. Drehdurchführung nach einem der Ansprüche 7, 10 oder 11, **dadurch gekennzeichnet, dass** das Kupplungsrohr (25, 25.1) ein Kunststoffrohr ist.

13. Drehdurchführung nach einem der Ansprüche 1 bis 12, **dadurch gekennzeichnet, dass** der Rotor (6) an seiner Anschlussseite zum Anschließen desselben an eine fahrzeugseitige Nabe (2, 2.1) einen umlaufenden Befestigungsflansch (7) mit darin eingebrachten Befestigungsbohrungen trägt und die Drehdurchführung (2, 2.1, 2.2, 2.3) mittels die Befestigungsbohrung durchgreifenden Schrauben (8) unter Zwischenschaltung einer Dichtung (9) an die fahrzeugseitige Nabe (1) angeschlossen ist.

14. Anordnung umfassend eine Drehdurchführung nach einem der Ansprüche 1 bis 13 sowie eine auf einem Achsstummel eines Fahrzeuges gelagerte Nabe zum Tragen eines mit Luft befüllbaren, auf einer Felge sitzenden Reifens, **dadurch gekennzeichnet, dass** der Achsstummel (12, 12.1) eine axiale Bohrung (13) mit einem zu dem Steckkupplungsteil der Drehdurchführung (2, 2.1, 2.2, 2.3) komplementären Steckkupplungsteil aufweist, durch welche in Eingriff gestellten Steckverbinderteile die Statorkammer (18) der Drehdurchführung (2, 2.1, 2.2, 2.3) abgedichtet an die fahrzeugseitige Luftversorgung angeschlossen ist, und dass der Rotor (6) der Drehdurchführung (2, 2.1, 2.2, 2.3) an der auf dem Achsstummel (12, 12.1) gelagerten Nabe drehmomentschlüssig unter Zwischenschaltung einer Dichtung (9) festgelegt ist.

15. Anordnung nach Anspruch 12, **dadurch gekennzeichnet, dass** der Stator (17) mit einer Drehmomentstütze (26) drehmomentschlüssig an den Achsstummel (12) angeschlossen ist.

16. Anordnung nach Anspruch 15, **dadurch gekennzeichnet, dass** die Drehmomentstütze (26) als Bügel, insbesondere als Federbügel, ausgeführt ist und mit einem Schenkel (27) in eine sich in axialer Richtung des Achsstummels (12) erstreckende und in dessen Mantelfläche eingebrachte Nut (28) eingreift, wobei der freie Endabschnitt dieses Schenkels (27) bis unter eine auf dem Achsstummel (12) sitzende Sicherungsmutter (29) greift.

17. Anordnung nach einem der Ansprüche 14 bis 16, **dadurch gekennzeichnet, dass** der Rotor (6) der Drehdurchführung (2, 2.1, 2.2, 2.3) an eine das freie Ende des Achsstummels (12, 12.1) einfassende Nabenkappe (3) als Teil der Nabe (1) angeschlossen ist.

## Claims

1. Rotary union of a tyre pressure control system for transmitting air from the region of an axle of a vehicle to a wheel resting on a hub (1), said rotary union (2, 2.1, 2.2, 2.3) comprising:
- A stator (17, 17.1), which can be connected via a fluid channel in the axial direction to a vehicle-side air supply line guided through an axle end (12, 12.1), and a rotor (6) arranged concentrically in relation to the stator (17, 17.1) and having at least one connection (10) for producing a fluid connection with a wheel valve,
- means for securing same to the vehicle side, said means (8) being designed to connect, via the interposition of a seal (9), the rotor (6) of the rotary union to the hub (1), that is rotatably mounted in relation to the axle end (12, 12.1), and
- a first part of a plug coupling (22, 25) to be engaged in the axial direction, wherein the complementary plug coupling part (14, 30) thereof is associated with an axle end (12, 12.1) carrying the wheel which is to be controlled in terms of its tyre pressure,
**characterised in that** the rotor (6) is arranged concentrically in relation to the stator (17, 17.1) while retaining a ring gap, and arranged in the ring gap is at least one ring seal (21), which can be activated for the purpose of changing a tyre pressure, and when activated acts in the radial direction against the stator (17, 17.1) and rotor (6) so as to provide a sealed transmission chamber (20, 32), wherein both the at least one rotor-side connection and the fluid channel of the stator (17, 17.1) are fluidically connected to the transmission chamber (20, 32).

2. Rotary union according to claim 1, **characterised in that,** in order to form at least two transmission chambers (20, 32), a plurality of activatable ring seals (21) are arranged in the ring gap, wherein at least one transmission chamber is delimited in the axial direction in each case by a ring seal (21).

3. Rotary union according to claim 1 or 2, **characterised in that** at least one plug coupling part of the stator is arranged with its longitudinal axis with a radial gap to the axis of rotation of the rotor.

4. Rotary union according to claim 2 and 3, **characterised in that** the stator of the rotary union comprises a number of plug coupling parts arranged adjacent to one another corresponding to the number of transmission chambers.

5. Rotary union according to any one of claims 1 to 4, **characterised in that** the stator (17) of the rotary union (2) carries a torque support (26) which serves to connect to the vehicle-side axle end (12).

6. Rotary union according to claim 5, **characterised in that** the torque support (26) is designed as a bar, in particular as a spring-loaded bar, for engaging into a slot (28) of the vehicle-side axle end (12), running in the axial direction.

7. Rotary union according to any one of claims 1 to 6, **characterised in that** the plug coupling part associated with the rotary union is a coupling tube (25).

8. Rotary union according to any one of claims 1 to 6, **characterised in that** the stator (17, 17.1) of the rotary union (2, 2.1), as a plug coupling part, comprises a coupling tube receiver (22, 22.1) extending in the axial direction, with a casing seal taking effect in relation to a coupling sleeve (25, 25.1) inserted therein.

9. Rotary union according to claim 8, **characterised in that** a face-side stop (23) is formed in the coupling tube receiver (22, 22.1) for the coupling tube (25, 25.1) which is inserted or is to be inserted therein,

10. Rotary union according to claim 9, **characterised in that** a coupling tube (25) is associated with the rotary union (2), which engages with one of its ends into the stator-side coupling tube receiver (22), and the other end of which engages with sealing effect into a coupling tube receiver of a vehicle-side axle end (12), which is complementary to the coupling tube end.

11. Rotary union according to claim 8, **characterised in that** the plug coupling part which is complementary to the plug coupling part of the rotary union (2.1) is the end section of a tube (25.1) which protrudes from the vehicle-side axle end (12.1) and is connected by its other end to the air supply.

12. Rotary union according to any one of claims 7, 10, or 11, **characterised in that** the coupling tube (25, 25.1) is a plastic tube.

13. Rotary union according to anyone of claims 1 to 12, **characterised in that** the rotor (6) carries on its connection side a securing flange (7), with securing boreholes introduced into it, for securing the rotor to a vehicle-side hub (2, 2.1), and the rotary union (2, 21, 2.2, 2.3) is connected to the vehicle-side hub (1) by means of screws (8) engaging through the boreholes, via the interposition of a seal (9).

14. Arrangement comprising a rotary union according to any one of claims 1 to 13, and a hub, mounted on an axle end of a vehicle, for carrying a tyre fitted to a rim and capable of being filled with air, **characterised in that** the axle end (12, 12.1) exhibits an axial borehole (13), with a plug coupling part complementary to the plug coupling part of the rotary union (2, 2.1, 2.2, 2.3), by means of which plug connecting parts, set in engagement, the stator chamber (18) of the rotary union (2, 2.1, 2.2, 2.3) is connected with sealing effect to the vehicle-side air supply, and that the rotor (6) of the rotary union (2, 2.1, 2.2, 2.3) is secured to the hub mounted on the axle end (12, 12.1) by the use of a torque wrench, via the interposition of a seal (9).

15. Arrangement according to claim 12, **characterised in that** the stator (17) is connected to a torque support (26) at the axle end (12) by the use of a torque wrench.

16. Arrangement according to claim 15, **characterised in that** the torque support (26) is designed as a bar, in particular as a spring-loaded bar, and engages with one limb (27) into a slot (28) extending in an axial direction of the axle end (12) and introduced into its casing surface, wherein the free end section of this limb (27) engages as far as under a securing nut (29) located on the axle end (12).

17. Arrangement according to any one of claims 14 to 16, **characterised in that** the rotor (6) of the rotary union (2, 2.1, 2.2, 2.3) is connected to a hub cap (3) encompassing the free end of the axle end (12, 12.1), as part of the hub (1).

## Revendications

1. Passage tournant d'un système de régulation de pression de pneumatique afin de transférer de l'air depuis la zone d'un essieu d'un véhicule vers une roue montée sur un moyeu (1), lequel passage tournant (2, 2.1, 2.2, 2.3)
- présente un stator (17, 17.1) raccordable à une conduite d'alimentation en air, située côté véhicule, avec un canal de fluide dans le sens axial, guidée à travers une fusée d'essieu (12, 12.1) ainsi qu'un rotor (6), disposé de façon concentrique par rapport au stator (17, 17.1), avec au moins un raccord (10), afin de réaliser une liaison de fluide avec une valve de roue,
- dispose de moyens pour sa fixation du côté véhicule, lesquels moyens de fixation (8) sont conformés pour raccorder, en intercalant une étanchéité (9), le rotor (6) du passage tournant au moyeu (1) logé de façon rotative sur la fusée d'essieu (12, 12.1), et
- comprend un premier élément d'un raccord rapide (22, 25) positionné pour un engagement dans le sens axial, dont l'élément complémentaire de raccord rapide (14, 30) est affecté à une fusée d'essieu (12, 12.1) supportant la roue à réguler à travers sa pression pneumatique,
**caractérisé en ce que** le rotor (6) est disposé de façon concentrique par rapport au stator (17, 17.1) en laissant une fente annulaire, dans laquelle fente annulaire est disposée au moins une étanchéité annulaire activable afin de modifier la pression de pneumatique et agissant, quand elle est activée, dans le sens radial contre stator (17, 17.1) et rotor (6), afin de mettre à disposition un compartiment de transfert (20, 32) étanche, l'au moins un raccord du côté rotor tout comme le canal de fluide du stator (17, 17.1) étant en liaison de fluide avec le compartiment de transfert (20, 32).

2. Passage tournant selon la revendication 1, **caractérisé en ce que,** pour configurer au moins deux compartiments de transfert (20, 32), plusieurs étanchéités annulaires (21) activables sont disposées dans la fente annulaire, au moins un compartiment de transfert étant limité par respectivement une étanchéité annulaire (21) dans le sens axial.

3. Passage tournant selon la revendication 1 ou 2, **caractérisé en ce qu'**au moins un élément de raccord rapide du stator est disposé avec son axe longitudinal avec un intervalle radial par rapport à l'axe de rotation du rotor.

4. Passage tournant selon les revendications 2 et 3, **caractérisé en ce que** le stator du passage tournant présente un nombre d'éléments de raccord rapide placés au voisinage les uns des autres correspondant au nombre de compartiments de transfert.

5. Passage tournant selon l'une des revendications 1 à 4, **caractérisé en ce que** le stator (17) du passage tournant (2) supporte un bras de couple (26) permettant le raccordement à la fusée d'essieu (12) côté véhicule.

6. Passage tournant selon la revendication 5, **caractérisé en ce que** le bras de couple (26) est conformé en étrier, notamment en étrier élastique, qui s'engage dans une rainure (28) de la fusée d'essieu (12) côté véhicule, s'étendant dans le sens axial.

7. Passage tournant selon l'une des revendications 1 à 6, **caractérisé en ce que** l'élément de raccord rapide affecté au passage tournant est un tube de couplage (25).

8. Passage tournant selon l'une des revendications 1 à 6, **caractérisé en ce que** le stator (17, 17.1) du passage tournant (2, 2.1) présente, en tant qu'élément de raccord rapide, un logement de tube de couplage (22, 22.1) s'étendant dans le sens axial avec une étanchéité à enveloppe agissant contre un tube de couplage (25, 25.1) qui y est engagé.

9. Passage tournant selon la revendication 8, **caractérisé en ce qu'**une butée (23) du côté frontal est configuré dans le logement du tube de couplage (22, 22.1) pour le tube de couplage (25, 25.1) qui y est engagé ou qui doit y être engagé.

10. Passage tournant selon la revendication 9, **caractérisé en ce qu'**au passage tournant (2) est affecté un tube de couplage (25) qui s'engage par l'une de ses extrémités dans le logement du tube de couplage (22) du côté stator et dont l'autre extrémité s'engage de manière étanche dans un logement de tube de couplage d'une fusée d'essieu (12) côté véhicule, complémentaire à l'extrémité du tube de couplage.

11. Passage tournant selon la revendication 8, **caractérisé en ce que** l'élément de raccord rapide complémentaire à l'élément de couplage rapide du passage tournant (2.1) est le tronçon d'extrémité d'un tube (25.1) qui dépasse de la fusée d'essieu (12) côté véhicule et qui est raccordé par son autre extrémité à une alimentation en air.

12. Passage tournant selon l'une des revendications 7, 10 ou 11, **caractérisé en ce que** le tube de couplage (25, 25.1) est un tube en plastique.

13. Passage tournant selon l'une des revendications 1 à 12, **caractérisé en ce que** le rotor (6) supporte du côté raccordement, afin d'être raccordé à un moyeu (2, 2.1) côté véhicule, une bride de fixation (7) périphérique comportant des alésages de fixation qui y ont été aménagés et que le passage tournant (2, 2.1, 2.2, 2.3) est raccordé en intercalant une étanchéité (9) sur le moyeu (1) côté véhicule, grâce à des vis (8) qui traversent les alésages de fixation.

14. Arrangement comprenant un passage tournant selon l'une des revendications 1 à 13 ainsi qu'un moyeu logé sur la fusée d'essieu d'un véhicule destiné à supporter un pneumatique pouvant être gonflé à l'air, monté sur une jante, **caractérisé en ce que** la fusée d'essieu (12, 12.1) comporte un alésage axial (13) avec un élément de raccord rapide complémentaire à l'élément de raccord rapide du passage tournant (2, 2.1, 2.2, 2.3), par lesquels les éléments de raccord rapide engagés l'un dans l'autre assurent le raccordement étanche du compartiment de stator (18) du passage tournant (2, 2.1, 2.2, 2.3) avec l'alimentation en air côté véhicule, et **en ce que** le rotor (6) du passage tournant (2, 2.1, 2.2, 2.3) est fixé de manière solidaire en rotation sur le moyeu logé sur la fusée d'essieu (12, 12.1) en intercalant une étanchéité (9).

15. Arrangement selon la revendication 12, **caractérisé en ce que** le stator (17) est raccordé de manière solidaire en rotation sur la fusée d'essieu (12) à l'aide d'un bras de couple (26).

16. Arrangement selon la revendication 15, **caractérisé en ce que** le bras de couple (26) est conformé en étrier, notamment en étrier à ressort et s'engage par un montant (27) dans une rainure (28) s'étendant dans le sens axial de la fusée d'essieu (12) et aménagée dans la surface d'enveloppe de cette dernière, le tronçon d'extrémité libre de ce montant (27) s'engageant jusque sous un écrou de sécurité (29) fixé sur la fusée d'essieu (12).

17. Arrangement selon l'une des revendications 14 à 16, **caractérisé en ce que** le rotor (6) du passage tournant (2, 2.1, 2.2, 2.3) est raccordé à un capuchon de moyeu (3), en tant que partie du moyeu (1), englobant l'extrémité libre de la fusée d'essieu (12, 12.1).
